# FASCICULE DE BREVET EUROPEEN

(11) **EP 2 828 730 B1**
(45) Date de publication et mention de la délivrance du brevet: **06.11.2019**
(21) Numéro de dépôt: 13719028.6
(22) Date de dépôt: 22.03.2013
(51) Int. Cl.: G06F 3/044

(54) **DISPOSITIF DE DETECTION CAPACITIVE INTEGRANT UNE PISTE METALLIQUE SUR UNE GARDE TRANSPARENTE**
KAPAZITIVE MESSVORRICHTUNG MIT EINEM METALLSTREIFEN AUF EINER TRANSPARENTEN SCHUTZVORRICHTUNG
CAPACITIVE SENSING DEVICE INCORPORATING A METAL STRIP ON A TRANSPARENT GUARD

(30) Priorité: 23.03.2012 FR 1252619
(43) Date de publication de la demande: 28.01.2015
(73) Titulaire: QuickStep Technologies LLC, Wilmington, DE 19801 (US)
(72) Inventeur: NEEL, Christian, F-30900 Nîmes (FR); BLONDIN, Christophe, F-30900 Nîmes (FR)
(74) Mandataire: Lang, Johannes
(86) Numéro de dépôt international: PCT/EP2013/056078
(87) Numéro de publication internationale: WO 2013/139964

(56) Documents cités:
- EP-A2- 0 706 147
- EP-A2- 2 267 791
- EP-A2- 2 420 918
- FR-A1- 2 949 008
- US-A1- 2002 000 977
- US-A1- 2010 052 700
- US-A1- 2011 169 783

## Description

La présente invention se rapporte à un dispositif de mesure capacitive entre un objet et un plan d'électrodes. Elle s'applique notamment dans le domaine général des surfaces tactiles capacitives 2D et détection capacitive 3D utilisées pour les commandes d'interface homme machine.

De plus en plus d'appareils de communication et de travail utilisent une interface de commande tactile comme un pad ou un écran. On peut citer par exemple les téléphones mobiles, Smartphones, notebooks électroniques, PC, souris, dalles, écrans géants.....

Un grand nombre de ces interfaces utilisent les technologies capacitives. La surface tactile est équipée d'électrodes conductrices reliée à des moyens électroniques permettant de mesurer la variation des capacités crées entre des électrodes et l'objet à détecter pour effectuer une commande.

Les techniques capacitives actuelles, utilisent le plus souvent deux couches d'électrodes conductrices en forme de ligne et de colonnes. L'électronique mesure les capacités de couplage qui existent entre ces lignes et colonnes. Lorsqu'un doigt est très proche de la surface active, les capacités de couplage à proximité du doigt sont modifiées et l'électronique peut ainsi localiser la position 2D (XY) dans le plan de la surface active.

Cette technologie permet de détecter la présence et la position du doigt au travers d'un diélectrique. Cette technique a l'avantage d'obtenir une très bonne résolution sur la localisation dans le plan XY de la surface sensible d'un ou de plusieurs doigts. Ces techniques ont toutefois l'inconvénient de ne détecter qu'un contact de l'objet voire une détection à très proche mais ne dépassant pas quelques mm. Il est difficile d'effectuer des commandes tactiles avec des gants épais (gant de ski, motard...), avec des ongles longs ou un stylet. La faible sensibilité des électrodes capacitives ne permet pas de déclencher une commande au travers de diélectrique épais.

Il existe aussi des techniques plus récentes permettant de mesurer la capacité absolue créée entre les électrodes et l'objet à détecter. Cette technique est similaire aux techniques dites self capacitance. On peut citer par exemple le brevet FR2756048 : Pont de mesure capacitif flottant, le brevet FR2893711 : Dispositif et procédé de mesure capacitive par pont flottant ou le brevet FR2844349 : Détecteur capacitif de proximité. Ces techniques permettent d'obtenir une mesure de la capacité inter électrode-objet de très haute résolution et de détecter par exemple un doigt à plusieurs cm voire à 10cm de distance. La détection se fait dans l'espace en 3 dimensions XYZ mais aussi en tactile sur le plan XY. On peut cette fois déclencher une commande avec un gant ou au travers de tout type de diélectrique épais. Toutefois un nouveau problème apparaît par rapport aux techniques de mesure à contact (surface tactile) au niveau de la grandeur capacitive à mesurer. En effet, avec les techniques capacitives actuelles type ligne - colonne, la grandeur capacitive est de l'ordre du pF alors qu'avec les techniques récentes la capacité inter électrode-objet est de l'ordre d'un fF. Pour cela il faut ajouter une couche de blindage, appelé garde, pour diminuer les capacités parasites.

Dans les dispositifs actuels les couches d'électrodes doivent être en matériau transparent et sont intégrées au plus prêt de l'écran (relié au potentiel de masse) pour réduire l'épaisseur du dispositif. Elles sont réalisées en ITO. Traditionnellement l'ITO a une résistivité entre 50ohm/carré et 200ohm/carré. L'intégration du plan de garde très proche de la masse (écran) donne une forte capacité de couplage entre la garde et la masse. Ce fort couplage capacitif associé à la résistivité élevée du matériau ITO crée une fuite capacitive et résistive (quadrature) significative pour la mesure. En schéma équivalent au premier ordre, nous avons un réseau RC. La capacité de couplage résulte de l'assemblage mécanique du dispositif et des surfaces de l'écran et plan de garde. On peut donc difficilement la modifier.

On connaît le document US2010/052700 décrit un plan de garde en parallèle du plan d'électrodes destiné à la détection. Le plan de garde est conçu pour rejeter le bruit extérieur. Le document EP2420918 décrit également un plan pour intercepter le bruit extérieur au moyen d'une piste métallique. Le document US2011/169783 décrit un écran tactile comprenant un plan de détection et un plan de garde relié à la terre.
EP 2 267 791 A2 décrit un appareil de détection tactile qui coupe efficacement les signaux de bruit en utilisant un plan de garde.

La présente invention a pour but de palier les inconvénients de l'art antérieur en proposant un nouveau dispositif pour limiter les courants de fuite. L'objectif précité est atteint par l'invention définie dans les revendications indépendantes; des modifications de l'invention sont définies dans les revendications dépendantes.

Un dispositif d'interface homme-machine présente, en vue de face notamment, une zone transparente pour visualiser un écran d'affichage et une zone d'accès où se trouve au moins une liaison métallique connectée à au moins deux plans disposés au-dessus de l'écran d'affichage , ces plans étant :
- un plan d'électrodes en matériau transparent conducteur résistif, ce plan étant présent dans la zone transparente,
- un plan conducteur en matériau transparent conducteur résistif utilisé comme garde active ou blindage pour le plan d'électrodes, cette garde active étant présente dans la zone transparente et s'étendant dans la zone d'accès.

Selon l'invention, le dispositif comprend au moins une piste métallique, dite piste de garde, pour réduire la résistivité de la garde, cette piste de garde étant :
- connectée à ladite liaison métallique et à la garde active, et
- disposée dans la zone d'accès.

Avec un tel dispositif, on connecte la garde à une piste métallique pour la rendre suffisamment conductrice et garantir son efficacité. De préférence cette piste est disposée sur une face de la garde, en particulier sur la face opposée au plan d'électrode. Le procédé de mise en œuvre de cette piste métallique est compatible avec l'industrie concernée. Cette piste métallique peut être complète, comme un cadre fermé autour de la zone transparente ou seulement sur un ou plusieurs des côtés suivant le niveau de résistivité souhaité.

De préférence, la zone d'accès est une zone non visible de l'extérieur. Généralement les fabricants de téléphone notamment définissent une zone non visible, opaque, à la périphérie de la zone transparente, les connexions métalliques venant en dessous de cette zone non visible de l'extérieur.

Avantageusement, le plan d'électrodes et la garde sont conçus à partir de l'oxyde d'indium dopé à l'étain ITO. D'autres matériaux transparents à la lumière comme l'oxyde de zinc dopé de l'aluminium (AZO) ou de l'oxyde de cadmium dopé à l'étain peuvent aussi être utilisés.

Selon l'invention, la liaison métallique peut être une limande provenant d'un circuit électronique de commande.

Selon une caractéristique avantageuse de l'invention, le plan conducteur est une garde selon une technologie à pont flottant.

Avantageusement, la zone transparente est une zone tactile pour la détection d'objet. Il peut s'agir d'une détection 3D dans un volume à proximité des électrodes.

La piste métallique peut être en argent, mais d'autres matériaux peuvent être utilisés.

D'autres avantages et caractéristiques de l'invention apparaîtront à l'examen de la description détaillée d'un mode de mise en œuvre nullement limitatif, et des dessins annexés, sur lesquels :

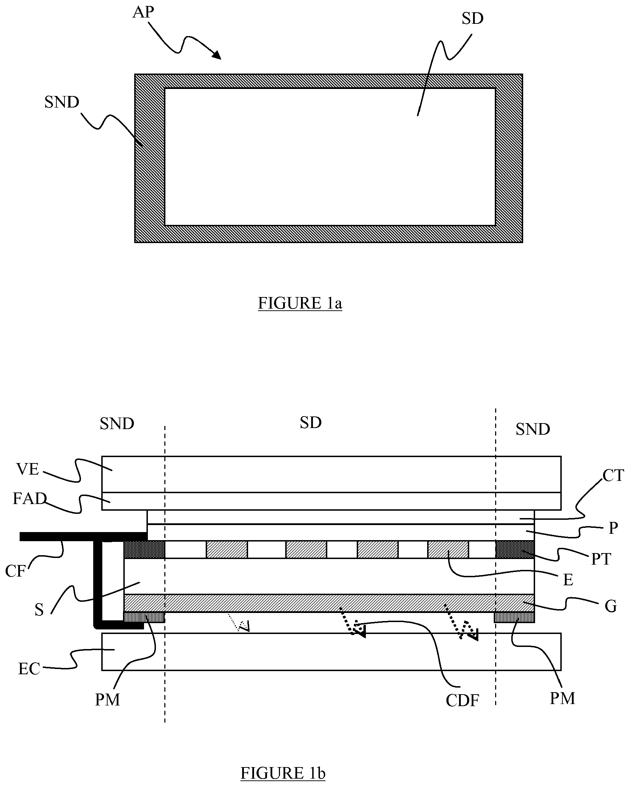

- les figures 1a et 1b sont des vues schématiques d'un appareil selon l'invention ;
- la figure 2 est une vue schématique illustrant des charges capacitives de fuite dues au caractère résistif des électrodes et de la garde ; et
- les figures 3a à 3f illustrent des exemples de dispositions de la piste métallique.

De façon générale, sur les figures la et 1b, on voit un appareil AP selon l'invention. Il peut s'agir d'un téléphone de type « smartphone » ou d'une tablette numérique dotée d'un écran tactile. Cet appareil AP comprend une surface de détection SD qui est la partie tactile sous laquelle se trouve notamment un plan (plat ou courbé) d'électrodes. Cette surface de détection SD comprend depuis la partie supérieure, plusieurs couches en matériau transparent telles que par exemple :
- une vitre externe VE,
- un film anti-débris FAD,
- une colle transparente CT, et
- un polariseur P,
- des électrodes E en matériau transparent conducteur tel que l'oxyde d'indium dopé à l'étain (ITO),
- un support S en verre pour électrodes,
- une garde G qui est une couche en matériau transparent conducteur tel que l'oxyde d'indium dopé à l'étain (ITO), et
- un écran EC d'affichage qui doit être visible de l'extérieur depuis la vitre externe VE.

Les électrodes et la garde se trouvent donc sous la surface de détection et sont en matériau transparent conducteur qui présente une haute résistivité.

On distingue également une surface de non détection SND qui entoure dans le cas d'espèce la surface de détection SD. Cette surface est généralement opaque de l'extérieur et ne comporte pas d'électrodes mais des pistes de connexion PT et des connecteurs flexibles CF qui sont métalliques donc de résistivité quasiment nulle.

La grande résistivité du matériau transparent conducteur peut être problématique (en présence ou non de la garde G) car un couplage entre ce matériau résistif et l'écran qui est généralement à la masse de l'appareil peut avoir lieu. Les électrodes (et la garde) doivent être à sensiblement un même potentiel (différent de celui de l'écran) sur tout le plan (plan des électrodes et/ou plan de la garde). Lorsque le couplage existe avec l'écran, des courants de fuite CDF existent et sont de plus en plus intenses en s'éloignant des connexions métalliques (PT, CF). Ainsi le couplage entre le matériau transparent conducteur (électrodes et/ou garde) et l'écran devient très supérieur au couplage que l'on cherche à mesurer entre les électrodes et l'objet d'intérêt qui serait au dessus de la vitre externe.

Selon l'invention, on dispose une piste métallique PM sous forme de cadre entourant toute la zone transparente. Il s'agit d'une piste en argent plaquée contre la face arrière de la garde G mais uniquement dans la zone de non transparence. Cette piste PM est connectée au connecteur flexible CF qui fournit un potentiel sensiblement identique à celui de la garde G.

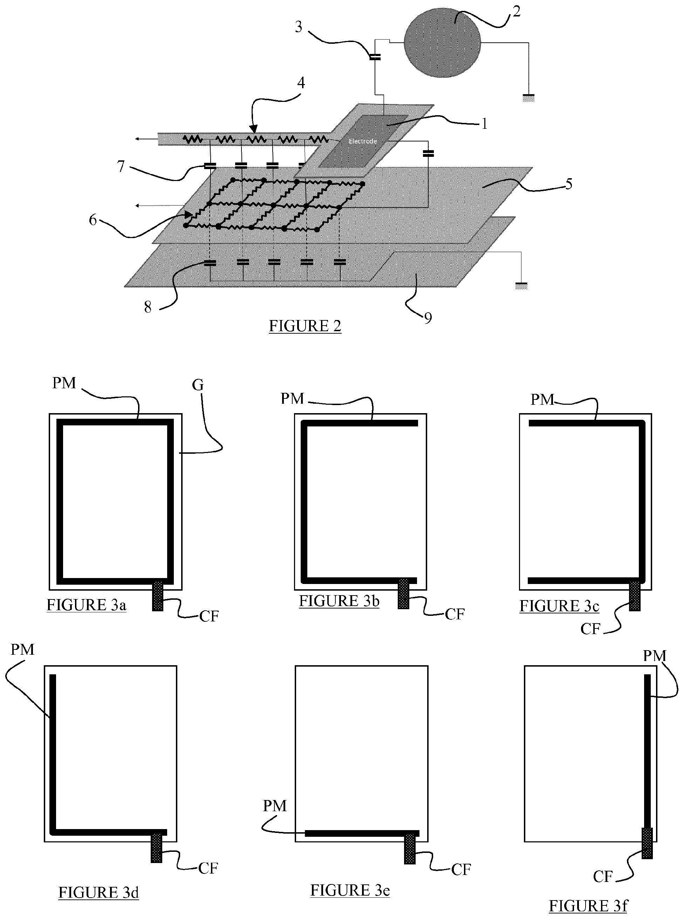

Sur la figure 2 on voit un schéma illustrant les capacités de fuite. On distingue le plan d'électrode 1 pour détecter le positionnement d'un objet 2 par mesure de la capacité 3 (Ctarget) entre eux. On estime que l'objet 2 est à la masse. Les électrodes sont conçues à base d'ITO qui présente une grande résistivité. Cette dernière est représentée par une série de résistances 4.

Le plan de garde 5 est également résistif car contient de l'ITO. Cette résistivité est représentée par un réseau de résistances 6. Des charges de fuite 7 existent entre les résistances 4 et les résistances 6. Par ailleurs, des capacités de fuite 8 existent également entre les résistances 6 et un plan de masse 9 (généralement l'écran d'affichage de l'appareil).

Sur les figures 3a à 3f, on voit la face arrière de la garde G, c'est-à-dire la face opposée aux électrodes. Plusieurs dispositions sont possibles. La figure 3a illustre une disposition préférée pour laquelle la piste métallique PM est un cadre fermé. Sur les figures 3b et 3c, la piste métallique PM est en forme de « C » ouvert sur une partie mais toujours connectée au connecteur CF. Sur la figure 3d, il s'agit d'un « L », et sur les figures 3e et 3f, il s'agit d'une seule barre, horizontale ou verticale.

Bien sûr, l'invention n'est pas limitée aux exemples qui viennent d'être décrits et de nombreux aménagements peuvent être apportés à ces exemples sans sortir du cadre de l'invention.

## Revendications

1. Dispositif (AP) d'interface homme-machine comprenant des électrodes conductrices reliées à des moyens électroniques permettant de mesurer la capacité entre les électrodes et des objets à détecter, lequel dispositif (AP) présentant une zone transparente (SD) pour visualiser un écran d'affichage (EC) et une zone d'accès (SND) où se trouve au moins une liaison métallique (CF) connectée à au moins deux plans disposés au-dessus de l'écran d'affichage, ces plans étant :
- un plan d'électrodes (E, PT) en matériau transparent conducteur résistif, ce plan étant présent dans la zone transparente,
- un plan conducteur (G) en matériau transparent conducteur résistif utilisé comme garde active (G) pour le plan d'électrodes pour diminuer les capacités parasites, cette garde active étant présente dans la zone transparente et s'étendant dans la zone d'accès,
**caractérisé en ce que** le dispositif d'interface comprend au moins une piste métallique (PM), dite piste de garde (PM), cette piste de garde étant :
- connectée à la garde active (G),
- connectée à ladite liaison métallique (CF), cette dernière étant connectée au plan d'électrodes (E, PT) de sorte que le plan conducteur (G) et le plan d'électrodes (E, PT) sont sensiblement à un même potentiel,
- disposée dans la zone d'accès (SND).

2. Dispositif selon la revendication 1, **caractérisé en ce que** la piste métallique (PM) est un cadre fermé entourant la zone transparente (SD).

3. Dispositif selon l'une quelconque des revendications précédentes, **caractérisé en ce que** la zone d'accès (SND) est une zone non visible de l'extérieur.

4. Dispositif selon l'une quelconque des revendications précédentes, **caractérisé en ce que** le plan d'électrodes (E, PT) et la garde active (G) sont conçus à partir de l'oxyde d'indium dopé à l'étain ITO.

5. Dispositif selon l'une quelconque des revendications précédentes, **caractérisé en ce que** la piste métallique (PM) est disposée sur une face de la garde active (G).

6. Dispositif selon la revendication 5, **caractérisé en ce que** la piste métallique (PM) est disposée sur la face opposée au plan d'électrodes (E, PT).

7. Dispositif selon l'une quelconque des revendications précédentes, **caractérisé en ce que** la liaison métallique (PM) est une limande provenant d'un circuit électronique de commande.

8. Dispositif selon l'une quelconque des revendications précédentes, **caractérisé en ce que** le plan conducteur (G) est une garde selon une technologie à pont flottant.

9. Dispositif selon l'une quelconque des revendications précédentes, **caractérisé en ce que** la zone transparente (SD) est une zone tactile.

10. Dispositif selon l'une quelconque des revendications précédentes, **caractérisé en ce que** la piste métallique (PM) est en argent.

## Patentansprüche

1. Mensch-Maschine-Schnittstellenvorrichtung (AP) mit leitfähigen Elektroden, die mit elektronischen Mitteln zum Messen der Kapazität zwischen den Elektroden und zu erfassenden Objekten verbunden sind, wobei die Vorrichtung (AP) einen transparenten Bereich (SD) zum Anzeigen eines Anzeigebildschirms (EC) und einen Zugangsbereich (SND) aufweist, in dem mindestens eine Metallverbindung (CF) mit mindestens zwei über dem Anzeigebildschirm angeordneten Ebenen verbunden ist, wobei diese Ebenen:
- eine Elektrodenebene (E, PT) aus transparentem leitfähigem resistivem Material, wobei diese Ebene in dem transparenten Bereich vorhanden ist,
- eine Leiterebene (G) aus transparentem leitfähigem resistivem Material, die als aktiver Schutz (G) für die Elektrodenebene zur Reduzierung der parasitären Kapazitäten verwendet wird, wobei dieser aktive Schutz in dem transparenten Bereich vorhanden ist und sich in den Zugangsbereich erstreckt,
**dadurch gekennzeichnet, dass** die Schnittstellenvorrichtung mindestens eine Metallleiterbahn (PM) beinhaltet, die als Schutzleiterbahn (PM) bezeichnet wird, wobei diese Schutzleiterbahn:
- mit dem aktiven Schutz (G) verbunden ist,
- mit der Metallverbindung (CF) verbunden ist, wobei letztere mit der Elektrodenebene (E, PT) verbunden ist, so dass die Leiterebene (G) und die Elektrodenebene (E, PT) im Wesentlichen auf einem gleichen Potential liegen,
- sich im Zugangsbereich (SND) befindet.

2. Vorrichtung nach Anspruch 1, **dadurch gekennzeichnet, dass** die Metallleiterbahn (PM) ein geschlossener Rahmen ist, der den transparenten Bereich (SD) umgibt.

3. Vorrichtung nach einem der vorangegangen Ansprüche, **dadurch gekennzeichnet, dass** der Zugangsbereich (SND) ein von außen nicht sichtbarer Bereich ist.

4. Vorrichtung nach einem der vorangegangen Ansprüche, **dadurch gekennzeichnet, dass** die Elektrodenebene (E, PT) und der aktive Schutz (G) aus zinndotiertem Indiumoxid ITO bestehen.

5. Vorrichtung nach einem der vorangegangen Ansprüche, **dadurch gekennzeichnet, dass** die Metallleiterbahn (PM) auf einer Seite des aktiven Schutzes (G) angeordnet ist.

6. Vorrichtung nach Anspruch 5, **dadurch gekennzeichnet, dass** die Metallleiterbahn (PM) auf der der Elektrodenebene (E, PT) gegenüberliegenden Seite angeordnet ist.

7. Vorrichtung nach einem der vorangegangen Ansprüche, **dadurch gekennzeichnet, dass** die Metallleiterbahn (PM) ein Flachbandkabel ist, das aus einer elektronischen Steuerschaltung stammt.

8. Vorrichtung nach einem der vorangegangen Ansprüche, **dadurch gekennzeichnet, dass** die Leiterebene (G) ein Schutz nach der Floating-Bridge-Technologie ist.

9. Vorrichtung nach einem der vorangegangen Ansprüche, **dadurch gekennzeichnet, dass** der transparente Bereich (SD) ein taktiler Bereich ist.

10. Vorrichtung nach einem der vorangegangen Ansprüche, **dadurch gekennzeichnet, dass** die Metallleiterbahn (PM) aus Silber besteht.

## Claims

1. A man-machine interface device (AP) comprising conductive electrodes connected to electronic means for measuring the capacitance between the electrodes and objects to be detected, said device (AP) having a transparent area (SD) for displaying a display screen (EC) and an access area (SND) where there is at least one metal link (CF) connected to at least two planes arranged above the display screen, these planes being:
- an electrode plane (E, PT) made of transparent resistive conductive material, the plane being present in the transparent area,
- a conductive plane (G) made of transparent resistive conductive material, used as an active guard (G) for the electrode plane to reduce the parasitic capacitances, this active guard being present in the transparent area and extending into the access area, **characterized in that** the interface device comprises at least one metal trace (PM), referred to as guard trace (PM), this guard trace being:
- connected to the active guard (G),
- connected to said metal link (CF), the latter being connected to the electrode plane (E, PT) so that the conductive plane (G) and the electrode plane (E, PT) are substantially at the same potential,
- arranged in the access area (SND).

2. The device according to claim 1, **characterized in that** the metal trace (PM) is a closed frame surrounding the transparent area (SD).

3. The device according to any one of the preceding claims, **characterized in that** the access area (SND) is an area that is not visible from the outside.

4. The device according to any one of the preceding claims, **characterized in that** the electrode plane (E, PT) and the active guard (G) are made from tin-doped indium oxide (ITO).

5. The device according to any one of the preceding claims, **characterized in that** the metal trace (PM) is arranged on one side of the active guard (G).

6. The device according to claim 5, **characterized in that** the metal trace (PM) is arranged on the side opposite to the electrode plane (E, PT).

7. The device according to any one of the preceding claims, **characterized in that** the metal link (PM) is a ribbon cable originating from an electronic control circuit.

8. The device according to any one of the preceding claims, **characterized in that** the conductive plane (G) is a guard according to a floating-bridge technology.

9. The device according to any one of the preceding claims, **characterized in that** the transparent area (SD) is a touch area.

10. The device according to any one of the preceding claims, **characterized in that** the metal trace (PM) is made of silver.
